# EUROPÄISCHE PATENTSCHRIFT

(11) **EP 3 931 658 B1**
(45) Veröffentlichungstag und Bekanntmachung des Hinweises auf die Patenterteilung: **07.06.2023**
(21) Anmeldenummer: 20703228.5
(22) Anmeldetag: 04.02.2020
(51) Int. Cl.: G05D 16/10

(54) **DRUCKREDUZIERVENTIL**
PRESSURE-REDUCING VALVE
SOUPAPE DE RÉDUCTION DE PRESSION

(30) Priorität: 01.03.2019 DE 202019101183 U
(43) Veröffentlichungstag der Anmeldung: 05.01.2022
(73) Patentinhaber: Neoperl GmbH, 79379 Müllheim (DE)
(72) Erfinder: FANGMEIER, Martin, 79424 Auggen (DE)
(74) Vertreter: Mertzlufft-Paufler, Cornelius
(86) Internationale Anmeldenummer: PCT/EP2020/052656
(87) Internationale Veröffentlichungsnummer: WO 2020/177961

(56) Entgegenhaltungen:
- EP-A1- 1 482 389
- JP-A- S6 262 065
- US-A- 5 396 918

## Beschreibung

Die Erfindung betrifft ein Druckreduzierventil mit einem Ventilgehäuse, in dessen Gehäuseinnenraum ein Ventilträger vorgesehen ist, der wenigstens einen Durchströmkanal hat, und mit einem topfförmigen Ventilkörper, der von einer Offenstellung gegen eine Rückstellkraft in eine Schließstellung verschieblich geführt ist, in welcher Schließstellung der Ventilkörper mit dem Umfangsrand seiner Topfform derart an einem am Ventilträger vorgesehenen und als Dichtring ausgebildeten Ventilsitz anliegt, dass der Ventilkörper zumindest eine Kanalöffnung des wenigstens einen Durchströmkanals verschließt, wobei der Dichtring in einer außenumfangsseitig offenen Ringnut des Ventilträgers gehalten und beidseits von den Nutflanken der Ringnut axial gestützt ist, wobei die dem Ventilkörper zugewandte Nutflanke vor dem Innenumfang des in Schließstellung des Druckreduzierventils am Dichtring anliegenden Ventilkörpers endet, wobei an der dem Ventilkörper zugewandten Stirnfläche des Dichtrings eine dichtlippenartige umlaufende Anformung angeformt ist, und wobei diese dichtlippenartige Anformung bei einem Anstieg des auf der Zulaufseite des Druckreduzierventils anstehenden Primärdrucks gegen den Innenumfang des Ventilkörpers anlegbar ist.

Aus der EP 1 482 389 A1 ist bereits ein gattungsgemäßes Druckreduzierventil mit einem Ventilgehäuse vorbekannt, in dessen Gehäuseinnenraum ein Ventilträger vorgesehen ist, der wenigstens einen Durchströmkanal hat, und mit einem topfförmigen Ventilkörper, der von einer Offenstellung gegen eine Rückstellkraft in eine Schließstellung verschieblich geführt ist. In dieser Schließstellung liegt der Ventilkörper 23 mit dem Umfangsrand seiner Topfform derart an einem am Ventilträger vorgesehenen und als Dichtring ausgebildeten Ventilsitz an, dass der Ventilkörper zumindest eine Kanalöffnung des wenigstens einen Durchströmkanals verschließt. Der als Ventilsitz dienende Dichtring ist in einer außenumfangsseitig offenen Ringnut des Ventilträgers gehalten und wird beidseits von den Nutflanken der Ringnut axial gestützt. Dabei endet die dem Ventilkörper zugewandte Nutflanke vor dem Innenumfang des in Schließstellung des Druckreduzierventils am Dichtring anliegenden Ventilkörpers, wobei an der dem Ventilkörper zugewandten Stirnfläche des Dichtrings eine dichtlippenartige umlaufende Anformung angeformt ist, und wobei diese dichtlippenartige Anformung bei einem Anstieg des auf der Zulaufseite des Druckreduzierventils anstehenden Primärdrucks gegen den Innenumfang des Ventilkörpers anlegbar ist. Das vorbekannte Druckreduzierventil weist ein Ventilstützelement auf, das mit einem Wasserdurchgang versehen ist. In dem vorbekannten Druckreduzierventil kann nun das im Leitungsnetz geführte Wasser von der Primärseite zur Sekundärseite durch den in dem Ventilstützelement ausgebildeten Wasserdurchgang fließen. Steigt der Sekundärdruck aufgrund des Anstiegs des Primärdrucks an, bewegt sich der Ventilkörper in eine Position, in der die vom Sekundärdruck auf das geschlossene Ende des Ventilkörpers ausgeübte Kraft mit der von einem elastischen Element auf den Ventilkörper ausgeübten Kraft ausgeglichen wird und das offene Ende des Ventilkörpers nähert sich dem Ventilsitz, um das sekundärseitige Ende des in dem Ventilstützelement gebildeten Wasserdurchgangs teilweise abzudecken, wodurch die Querschnittsfläche des sekundärseitigen Endes des Wasserdurchgangs verringert wird. Infolgedessen nimmt der Druckverlust im Wasserdurchgang zu, um den Sekundärdruck zu verringern, wodurch sich der Sekundärdruck einem vorbestimmten Niveau nähert. Wenn der Primärdruck weiter ansteigt, stößt das offene Ende des Ventilkörpers an dem Ventilsitz an, während ein zylindrischer Abschnitt des Ventilkörpers das sekundärseitige Ende des in dem Ventilstützelement gebildeten Wasserdurchgangs bedeckt, um dadurch den Wasserdurchgang zu schließen und den Wasserfluss von der Primärseite zur Sekundärseite abzusperren. Somit wird der Sekundärdruck auf dem vorbestimmten Niveau gehalten. Das vorbekannte Druckreduzierventil erfordert jedoch einen vergleichsweisen hohen Aufwand in Konstruktion und Herstellung.

Aus der WO 2015/161905 kennt man bereits ein Druckreduzierventil, das den Wasserdruck in dem vom Druckreduzierventil stromabwärts gelegenen Leitungsabschnitt auf einen festgelegten Maximalwert begrenzen und ein Bersten im Bereich dieses stromabwärts gelegenen Leitungsabschnitts durch einen den Maximalwert übersteigenden Druckanstieg verhindern soll. Das vorbekannte Druckreduzierventil weist dazu ein in eine Fluidleitung einsetzbares oder zwischenschaltbares Ventilgehäuse auf. Im Gehäuseinnenraum des Ventilgehäuses ist ein topfförmiger Ventilkörper vorgesehen. Das vorbekannte Druckreduzierventil hat einen Ventilträger, in dem wenigstens ein Durchströmkanal vorgesehen ist. Verengt sich der Leitungsquerschnitt im stromabwärts gelegenen Leitungsabschnitt und steigt dort der Wasserdruck zunehmend, wird der verschieblich geführte Ventilkörper unter dem Druck des durchströmenden Mediums von einer Offenstellung gegen eine Rückstellkraft in eine Schließstellung bewegt, in welcher Schließstellung der Ventilkörper mit dem Umfangsrand seiner Topfform derart an einem am Ventilträger vorgesehenen und durch einen Dichtring gebildeten Ventilsitz anliegt, dass der Ventilkörper zumindest eine Kanalöffnung des wenigstens einen Durchströmkanals verschließt. Da der Ventilkörper bei steigendem Wasserdruck in dem vom Druckreduzierventil stromaufwärts gelegene Leitungsabschnitt gegen die Rückstellkraft des zumindest einen Rückstellelements zunehmend in Richtung zum Ventilträger gedrückt wird und dadurch an der damit kleiner werdenden Kanalöffnung der Druckverlust steigt, wird der Druck des Fluids in dem vom Druckreduzierventil stromabwärts gelegene Leitungsabschnitt auf einen festgelegen Maximalwert begrenzt. Wird ein solches vorbekanntes Druckreduzierventil jedoch einem An-/Aus-Ventil oder Sperrventil vorgeschaltet, kann in Schließstellung des Druckreduzierventils ein Teil des stromaufwärts des Druckreduzierventils anstehenden Primärwasserdrucks durch das Druckreduzierventil hindurchkriechen und den statischen Druck im Bereich zwischen dem Druckreduzierventil und dem in Strömungsrichtung nachfolgenden An-/Aus-Ventil derart ansteigen lassen, dass es zum Bersten der stromabwärts vorgesehenen druckbeaufschlagten Applikation kommt.

Es besteht daher insbesondere die Aufgabe, ein Druckreduzierventil der eingangs erwähnten Art zu schaffen, das in seiner Schließstellung einer Erhöhung des statischen Drucks im Bereich zwischen dem Druckreduzierventil und einer stromabwärts gelegenen Applikation entgegenwirkt und ein Bersten im Bereich dieses Leitungsabschnitts in Folge eines überhöhten Druckanstiegs wirkungsvoll verhindert.

Die erfindungsgemäße Lösung dieser Aufgabe besteht bei dem Druckreduzierventil der eingangs erwähnten Art insbesondere darin,
- dass zwischen einem Nutgrund der Ringnut (32) und der dichtlippenartigen Anformung ein Ringraum vorgesehen ist, der mit der Zulaufseite des Druckreduzierventils kommuniziert, und
- dass im Bereich der Ringnut zumindest ein Druckausgleichskanal vorgesehen ist, der die Zulaufseite des Druckreduzierventils mit dem Ringraum verbindet und/oder, dass an dem dem Ventilkörper zugewandten Stirnrand der dichtlippenartigen Anformung zumindest eine Einsenkung oder Einformung vorgesehen ist, welche den Ringraum mit einem zwischen dem Ventilträger und dem Ventilkörper in Schließstellung des Druckreduzierventils angeordneten Ringspalt fluidführend verbindet.

Das erfindungsgemäße Druckreduzierventil weist ein Ventilgehäuse auf, das in eine Fluidleitung einsetzbar oder zwischenschaltbar ist, um den Wasserdruck in dem vom Druckreduzierventil stromabwärts gelegenen Leitungsabschnitt auf einen festgelegten Maximalwert zu begrenzen. Der den Ventilsitz bildende Dichtring ist in einer außenumfangsseitig offenen Ringnut des Ventilträgers gehalten und beidseits von den Nutflanken der Ringnut axial abgestützt. Dabei endet die dem Ventilkörper zugewandte Nutflanke vor dem Innenumfang des in Schließstellung des Druckreduzierventils am Dichtring anliegenden Ventilkörpers. An der dem Ventilkörper zugewandten Stirnfläche des Dichtrings ist eine dichtlippenartige umlaufende Anformung angeformt. Diese dichtlippenartige Anformung legt sich in Schließstellung des Druckreduzierventils bei einem Anstieg des auf der Zulaufseite des Druckreduzierventils anstehenden Primärdrucks dicht an den Innenumfang des Ventilkörpers an. Da der Dichtring beidseits axial durch die Nutflanken der Ringnut abgestützt ist, wird einer sogbedingten Verformung der am Dichtring entgegengewirkt. In Schließstellung des Druckreduzierventils dichtlippenartige Anformung verhindert die dichtlippenartigen Anformung auf diese Weise einen unerwünschten Druckanstieg auch auf der Ablaufseite des Druckreduzierventils.

Damit der auf der Zulaufseite des Druckreduzierventils anstehende Primärdruck die dichtlippenartige Anformung am Dichtring in Schließstellung des Druckreduzierventils dicht an den Innenumfang des topfförmigen Ventilkörpers anlegen kann, ist erfindungsgemäß vorgesehen, dass zwischen einem Nutgrund der Ringnut und der dichtlippenartigen Anformung ein Ringraum vorgesehen ist, der mit der Zulaufseite des Druckreduzierventils kommuniziert. Dazu kann im Bereich der Ringnut zumindest ein Druckausgleichskanal vorgesehen sein, der die Zulaufseite des Druckreduzierventils mit dem Ringraum verbindet. Zusätzlich oder stattdessen ist es auch möglich, dass an dem dem Ventilträger zugewandten Stirnrand der dichtlippenartigen Anformung zumindest eine Einsenkung oder Einformung vorgesehen ist, welche den Ringraum mit einem zwischen dem Ventilträger und dem Ventilkörper in Schließstellung des Druckreduzierventils vorgesehenen Ringspalt fluidführend verbindet.

Da somit der auf der Zulaufseite des Druckreduzierventils anstehende Primärdruck derart in den Ringraum einsickern kann, dass in Schließstellung des Druckreduzierventils die dichtlippenartige Anformung elastisch gegen die Eigenelastizität des für die Anformung verwendeten Material gegen den Innenumfang des topfförmigen Ventilkörpers gepresst wird, wird ein Durchsickern des auf der Zulaufseite des Druckreduzierventils anstehenden Primärdruckes durch den Ventilsitz hindurch auch auf die ablaufseitige Sekundärseite des Druckreduzierventils und ein druckbedingtes Bersten des auf der Ablaufseite des Druckreduzierventils angeordneten Leitungsabschnitts wirkungsvoll verhindert.

Damit der Primärdruck von der Zulaufseite des Druckreduzierventils gut in den Ringraum zwischen der dichtlippenartigen Anformung und dem Ventilträger gelangen kann, ist es vorteilhaft, wenn der dem Ventilträger zugewandte Stirnrand der dichtlippenartigen Anformung kronenförmig ausgebildet ist und voneinander beabstandete Einsenkungen aufweist.

Das als Rückstellkraft dienende Rückstellelement kann beispielsweise ein gummielastisches Bauteil sein. Eine besonders einfache und zweckmäßige Ausführungsform gemäß der Erfindung sieht jedoch vor, dass das als Rückstellkraft dienende, mindestens eine Rückstellelement eine Schrauben-Druckfeder ist.

Damit der Ventilkörper funktionssicher am Ventilträger sicher verschieblich geführt werden kann, ist es vorteilhaft, wenn der Ventilträger einen Ventilträger-Abschnitt hat, der am Gehäuse-Innenumfang des Ventilgehäuses axial fest und/oder zum Gehäuse-Innenumfang zentriert anliegt. Dabei sieht eine bevorzugte Ausführungsform gemäß der Erfindung vor, dass der Ventilträger-Abschnitt des Ventilträgers tellerförmig ausgebildet ist.

Damit der Ventilkörper mit steigendem Druck des Fluids zunehmend auf dem Ventilträger aufgeschoben und aufgepresst werden kann, ist es vorteilhaft, wenn der Ventilträger einen Führungsabschnitt hat, an welchem Führungsabschnitt der topfförmige Ventilkörper mit seinem Ventilkörper-Innenumfang verschieblich geführt ist.

Weiterbildungen gemäß der Erfindung ergeben sich aus den Figuren in Verbindung mit der Beschreibung sowie den Ansprüchen. Nachstehend wird die Erfindung anhand eines bevorzugten Ausführungsbeispiels noch näher beschrieben.

Es zeigt:
- Fig. 1: ein im Längsschnitt dargestelltes Druckreduzierventil mit einem Ventilgehäuse, in dessen Gehäuseinnenraum ein topfförmiger Ventilkörper auf einem Ventilträger verschieblich geführt ist, wobei der Ventilkörper sich hier in einer Offenstellung des Druckreduzierventils befindet,
- Fig. 2: das Druckreduzierventil aus Fig. 1 in seiner Schließstellung, in welcher der Ventilkörper mit seinem Stirnumfangsrand an einem als Ventilsitz dienenden und in einer Ringnut des Ventilträgers angeordneten Dichtring anliegt,
- Fig. 3: das in seiner Schließstellung befindliche Druckreduzierventil aus den Fig. 1 und 2 in einem Detail-Längsschnitt in dem in Fig. 2 umgrenzten Teilbereich,
- Fig. 4: das Druckreduzierventil aus den Fig. 1 bis 3 in einer auseinandergezogenen perspektivischen Darstellung seiner Bestandteile, und
- Fig. 5: den als Ventilsitz des Druckreduzierventils dienenden Dichtring in einer perspektivischen Unteransicht, wobei dieser Dichtring teilweise aufgeschnitten dargestellt ist.

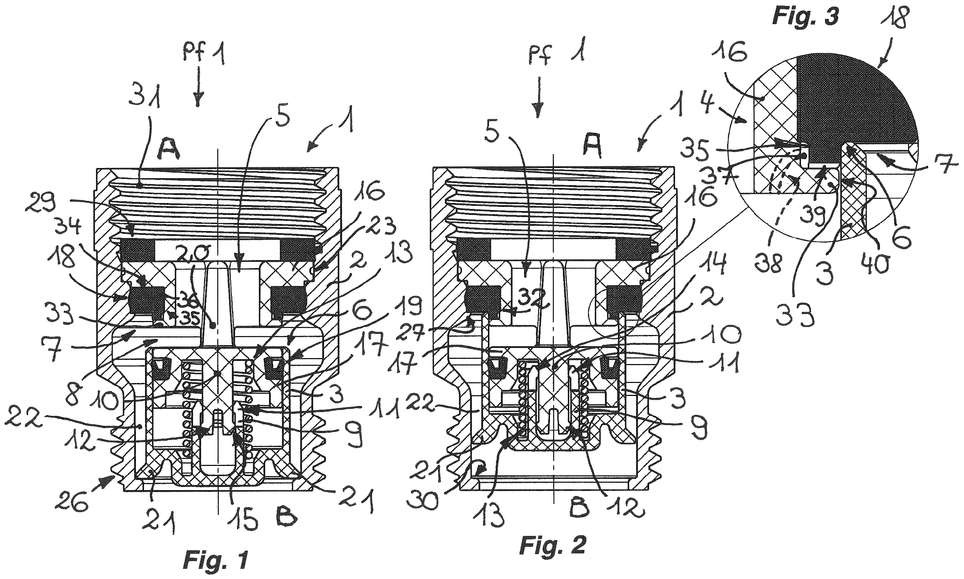

In den Fig. 1 bis 5 ist ein in Pfeilrichtung Pf1 durchströmtes Druckreduzierventil 1 dargestellt, das beispielsweise in eine Wasserleitung einsetzbar ist und den Wasserdruck in dem vom Druckreduzierventil 1 stromabwärts gelegene Leitungsabschnitt auf einen festgelegten Maximalwert begrenzen soll. Das Druckreduzierventil 1 weist ein Ventilgehäuse 2 auf, das in eine Fluidleitung einsetzbar oder zwischenschaltbar ist, um den Wasserdruck in dem vom Druckreduzierventil 1 stromabwärts gelegenen Leitungsabschnitt auf einen festgelegten Maximalwert zu begrenzen. Im Gehäuseinnenraum des Ventilgehäuses 2 ist ein topfförmiger Ventilkörper 3 angeordnet. Das Druckreduzierventil 1 hat einen Ventilträger 4, in dem wenigstens ein Durchströmkanal 5 vorgesehen ist. Verengt sich der Leitungsquerschnitt im stromabwärts gelegenen Leitungsabschnitt und steigt dort der Wasserdruck zunehmend, wird der verschieblich geführte Ventilkörper 3 unter dem Druck des durchströmenden Mediums von der in Fig. 1 gezeigten Offenstellung gegen die Rückstellkraft mindestens eines Rückstellelements in die in Fig. 2 und 3 gezeigte Schließstellung bewegt, in welcher Schließstellung der Ventilkörper 3 mit dem Stirnumfangsrand 6 seiner Topfform derart an einem am Ventilträger 4 vorgesehenen und durch einen Dichtring 18 gebildeten Ventilsitz 7 anliegt, dass der Ventilkörper 3 zumindest eine Kanalöffnung 8 des wenigstens einen Durchströmkanals 5 verschließt. Da der Ventilkörper 3 bei steigendem Wasserdruck in dem vom Druckreduzierventil 1 stormaufwärts gelegenen Leitungsabschnitt gegen die Rückstellkraft des zumindest einen Rückstellelements zunehmend in Richtung zum Ventilträger 4 gedrückt wird und dadurch an der hiermit kleiner werdenden Kanalöffnung 8 der Druckverlust steigt, wird der Druck des Fluids in dem vom Druckreduzierventil 1 stromabwärts gelegenen Leitungsabschnitt auf einen festgelegten Maximalwert begrenzt. Der den Ventilsitz 7 bildende Dichtring 18 ist in einer außenumfangsseitig offenen Ringnut 32 des Ventilträgers 4 gehalten und beidseits von den Nutflanken 33, 34 der Ringnut 32 axial abgestützt. Wie insbesondere aus dem Detail-Längsschnitt in Fig. 3 deutlich wird, endet dabei die dem Ventilkörper 3 zugewandte Nutflanke 33 vor dem Innenumfang des in Schließstellung des Druckreduzierventils am Dichtring 18 anliegenden Ventilkörpers 3. An der dem Ventilträger 4 zugewandten Stirnfläche des Dichtrings 18 ist eine dichtlippenartige umlaufende Anformung 35 angeformt. Diese dichtlippenartige Anformung 35 legt sich in Schließstellung des Druckreduzierventils 1 bei einem Anstieg des auf der Zulaufseite A des Druckreduzierventils 1 anstehenden Primärdrucks gegen den Innenumfang des Ventilkörpers 3 dicht an. Da der Dichtring 18 beidseits zwischen den Nutflanken 33, 34 der Ringnut 32 axial abgestützt wird, wird einer sogbedingten Verformung der dichtlippenartigen Anformung 35 entgegengewirkt. In Schließstellung des Druckreduzierventils 1 legt sich diese dichtlippenartige Anformung 35 in Schließstellung des Druckreduzierventils 1 bei einem Anstieg des zulaufseitig anstehenden Primärdrucks an den Innenumfang des Ventilkörpers 3 dicht an und verhindert auf diese Weise einen unerwünschten Druckanstieg auch auf der Ablaufseite B des Druckreduzierventils 1. Das hier dargestellte Druckreduzierventil 1 lässt sich daher insbesondere bei solchen Applikationen gut einsetzen, bei denen auf der Ablaufseite des Druckreduzierventils 1 ein beispielsweise einer WC-Duschbrause vorgeschaltetes An-/Aus-Ventil vorgesehen ist.

In den Fig. 1, 2 und 4 ist gut erkennbar, dass am Topfboden des Ventilkörpers 3 stirninnenseitig eine zentrale Haltehülse 9 vorgesehen ist, in die ein am Ventilträger 4 angeordneter Haltezapfen 10 vorsteht. Am Innenumfang der Haltehülse 9 ist ein Anschlag 11 vorgesehen, der derart mit einem Gegenanschlag 12 am Außenumfang des Haltezapfens 10 zusammenwirkt, dass in Offenstellung des Druckreduzierventils 1 der Anschlag 11 und der Gegenanschlag 12 den Schiebeweg des Ventilkörpers 3 relativ zum Ventilträger 4 begrenzen. Da der Anschlag 11 und der mit ihm zusammenwirkende Gegenanschlag 12 den Schiebeweg des Ventilkörpers 3 relativ zum Ventilträger 4 in die Offenstellung begrenzen, wird einem unbeabsichtigten Auseinanderfallen des hier dargestellten Druckreduzierventils 1 bei der Lagerung, beim Transport oder bei der Montage entgegengewirkt. Ventilträger 4, Ventilkörper 3 und das zischen ihnen wirksame Rückstellelement bilden nebst den dazugehörigen Dichtringen 18, 19 praktisch eine Einsetzeinheit, die zur Vervollständigung des Druckreduzierventils 1 nur noch in das Ventilgehäuse 2 eingesetzt werden muss. Dadurch wird die Montage des hier dargestellten Druckreduzierventils 1 wesentlich vereinfacht.

In den Figuren 1 und 2 ist erkennbar, dass das mindestens eine Rückstellelement hier als Schrauben-Druckfeder 13 ausgebildet ist. Dabei umgreift die als Rückstellelement dienende Schrauben-Druckfeder 13 den Haltezapfen 10 und die Haltehülse 9. Der Haltezapfen 10 und die Haltehülse 9 sind koaxial zueinander und zur Ventilgehäuse-Längsachse ausgerichtet. In den Fig. 1 und 2 ist erkennbar, dass der Anschlag 11 am freien Stirnendbereich der Haltehülse 9 angeordnet ist. Um den Schiebeweg des am Ventilträger 4 des verschieblich geführten Ventilkörpers 3 ausreichend lang bemessen zu können, ist auch der Gegenanschlag 12 am freien Stirnendbereich des Haltezapfens 10 angeordnet. Um die Funktion des Druckreduzierventils 1 nicht zu beeinträchtigen, selbst wenn eine Relativverdrehung von Ventilkörper 3 und Ventilträger 4 erfolgt, sind der Anschlag 11 und der Gegenanschlag 12 jeweils als umfangsseitig umlaufender oder vorzugsweise segmentierter Ringflansch oder Ringwulst ausgebildet.

Sowohl der am Innenumfang der Haltehülse 9 vorgesehene Anschlag 11 als auch der am Außenumfang des Haltezapfens 10 angeordnete Gegenanschlag 12 weisen eine sich zum freien Stirnende von Halthülse 9 bzw. Haltezapfen 10 hin verjüngende Auflaufschräge oder Auflaufflanke 14, 15 auf. In Fig. 1 ist dargestellt, dass der an der Haltehülse 9 vorgesehene Anschlag 11 sowie der am Haltezapfen 10 seitlich vorstehende Gegenanschlag 12 einander derart hintergreifen, dass der Ventilkörper 3 und der Ventilkörper 4 vor Montage in das Ventilgehäuse 2 des Druckreduzierventils 1 aneinander gehalten sind.

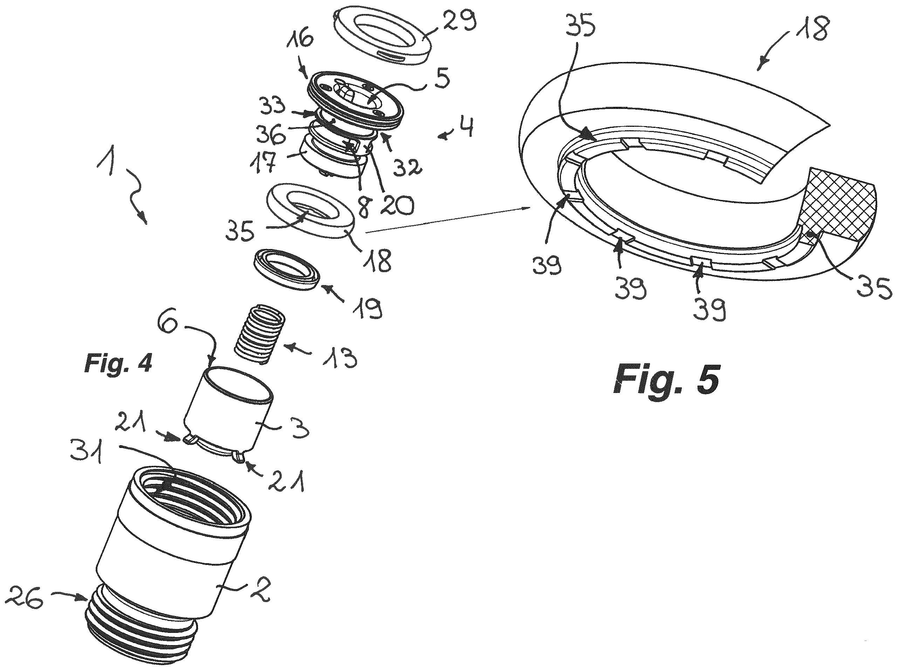

Aus Fig. 4 wird deutlich, dass der Ventilträger 4 einen Ventilträger-Abschnitt 16 hat, welcher Ventilträger-Abschnitt 16 am Gehäuseinnenumfang des Ventilgehäuses 2 axial fest anliegt und welcher in Gebrauchsstellung des Druckreduzierventils 1 im Gehäuseinneren des Ventilgehäuses 2 unverrückbar gehalten ist. Dieser Ventilträger-Abschnitt 16 ist im Wesentlichen tellerförmig ausgebildet.

Der Ventilträger 4 hat einen Führungsabschnitt 17, an welchem Führungsabschnitt 17 der Ventilkörper 3 mit seinem Ventilkörper-Innenumfang verschieblich geführt ist. Dieser Führungsabschnitt 17 des Ventilträgers 4 weist an seiner zum Ventilkörper-Innenraum gerichteten Stirnfläche die Haltehülse oder - wie hier - den Haltezapfen 10 auf.

Damit das durchströmende Fluid des Druckreduzierventils 1 nur durch den zumindest einen Durchströmkanal 5 hindurch passieren kann, ist am Ventilkörper-Abschnitt 16 eine Ringdichtung 18 vorgesehen, mit welcher dieser Ventilkörper-Abschnitt 16 dicht am Gehäuseinnenumfang des Ventilgehäuses 2 anliegt. Auch am Führungsabschnitt 17 des Ventilträgers 4 ist eine Ringdichtung 19 angeordnet, die das Topfinnere des topfförmigen Ventilkörpers 3 gegenüber dem durchströmenden Fluid abdichtet. Dabei liegt die Ringdichtung 19 dicht am Topf-Innenumfang des Ventilkörpers 3 an. Aus einem Vergleich der Fig. 1, 2 und 4 ist erkennbar, dass der Ventilkörper-Abschnitt 16 und der Führungsabschnitt 17 des Ventilträgers 4 über einen Verbindungsabschnitt 20 verbunden sind. An diesem Verbindungsabschnitt 20 ist hier die zumindest eine Kanalöffnung 8 des Durchströmkanals 5 angeordnet. Dabei ist der Verbindungsabschnitt 20 derart konturiert oder weist einen derartigen Durchmesser auf, dass die Kanalöffnung 8 in der Schließstellung des Druckreduzierventils 1 von der Topf-Innenumfangswandung des topfförmigen Ventilkörpers 3 verschlossen wird.

Aus einem Vergleich der Fig. 1, 2 und 4 wird deutlich, dass am Ventilkörper 3 außenumfangsseitig wenigstens ein Gleitelement und hier vier, in Umfangsrichtung gleichmäßig voneinander beabstandete Gleitelemente 21 vorgesehen sind, die in radialer Richtung derart über den Ventilkörper 3 vorstehen, dass zwischen dem Gehäuseinnenumfang des Ventilgehäuses 2 einerseits und dem Außenumfang des Ventilkörpers 3 andererseits ein Ringkanal 22 gebildet ist. Da der Ventilkörper 3 nur mit seinen seitlich vorstehenden Gleitelementen 21 am Gehäuseinnenumfang des Ventilgehäuses 2 gleitet, wird die Reibungsfläche des Ventilkörpers 3 wirkungsvoll reduziert. Die Gleitelemente 21 liegen in der Offenstellung des Ventils 1 an einem Ringabsatz 30 am Gehäuseinnenumfang des Ventilgehäuses 2 an.

Aus einem Vergleich der Fig. 1, 2 und 4 wird deutlich, dass am Außenumfang des Ventilkörper-Abschnitts 16 eine Ringnut 23 vorgesehen ist. Diese Ringnut 23 ist über zumindest einen Belüftungskanal mit dem Topfinnenraum des topfförmigen Ventilkörpers 3 verbunden. Im Ventilgehäuse 2 des Druckreduzierventils 1 ist zumindest eine Belüftungsöffnung vorgesehen, die in der Ringnut 23 mündet. Während der Schiebebewegungen des Ventilkörpers 3 kann die im Topfinnenraum des topfförmigen Ventilkörpers 3 gefangene Luft über den Belüftungskanal und die Belüftungsöffnung entweichen. Auf diese Weise wird verhindert, dass sich im Topfinnenraum des Ventilkörpers 3 ein unerwünschter Gegendruck aufbauen kann, wenn der Druck des auslaufseitigen Fluids den Ventilkörper 3 auf den Führungsabschnitt 17 des Ventilträgers 4 drückt.

Das Ventilgehäuse 2 weist auf seiner Zulaufseite A ein Innengewinde 31 und auf seine Ablaufseite B ein komplementäres Außengewinde 26 auf. Das Ventilgehäuse 2 kann zum Beispiel mit dem Außengewinde 26 auf den Schlauchanschluss einer flexiblen Schlauchleitung aufgeschraubt werden, um diese flexible Schlauchleitung vor einem überhohen Druck des Fluids und vor einem druckbedingten Bersten zu schützen. Wird der Ventilträger 4 mit dem auf seiner Zulaufseite A angeordneten Innengewinde 31 an einen Wasserzulauf angeschlossen, ist der Ventilträger 4 mit seinem Ventilträger-Abschnitt 16 zwischen dem am Gehäuseinnenumfang des Ventilgehäuses 2 angeordneten Ringabsatz 27 und dem hier nicht weiter dargestellten Wasserzulauf fest eingespannt. Damit ein Passieren des durchströmenden Wassers nur im Bereich des zumindest einen Durchströmkanals 5 sichergestellt wird, sind beidseits des Ventilträger-Abschnitts 16 die Ringdichtungen 18, 29 vorgesehen. Möglich ist auch, dass hier dargestellte Druckreduzierventil zwischen dem zulaufseitigen Wasseranschluss und einen dem Druckreduzierventil 1 in Strömungsrichtung nachfolgenden An-/Aus-Ventil zwischenzuschalten, um ein Nachsickern des Primärdruckes durch den Ventilsitz 17 hindurch auf die ablaufseitige Sekundärseite B des Druckreduzierventils 1 zu verhindern und um einem Bersten des zwischen dem Druckreduzierventil 1 und dem nachfolgenden An-/Aus-Ventil vorgesehenen Leitungsabschnitts entgegenzuwirken.

In den Fig. 1 und 2 ist erkennbar, dass zwischen einem Nutgrund 36 der Ringnut 32 und der dichtlippenartigen Anformung 35 am Dichtring 18 ein Ringraum 37 vorgesehen ist, der mit der Zulaufseite des Druckreduzierventils 1 kommuniziert. Damit dieser Ringraum 37 mit der Zulaufseite A des Druckreduzierventils 1 kommunizieren kann, kann im Bereich der Ringnut 32 zumindest ein Druckausgleichskanal 38 vorgesehen sein, der in Fig. 1 durch gestrichelte Linien im Bereich der Nutflanke 33 angedeutet ist und der mit der Zulaufseite des Druckreduzierventils 1 kommuniziert.

Eine in den Fig. 1 bis 5 durch durchgezogene Linien gezeigte bevorzugte Ausführungsform gemäß der Erfindung sieht jedoch vor, dass an dem dem Ventilkörper 3 zugewandten Stirnrand der dichtlippenartigen Anformung 35 zumindest einer Einsenkung 39 oder Einformung vorgesehen ist, welche den Ringraum 37 mit einem zwischen dem Ventilträger 4 und dem Ventilkörper 3 in Schließstellung des Druckreduzierventils 1 verbleibenden Ringspalt 40 fluidführend verbindet.

Wie aus der in Fig. 5 gezeigten perspektivischen Unteransicht des Dichtrings 18 deutlich wird, ist der dem Ventilkörper 3 zugewandte Stirnrand der dichtlippenartigen Anformung 35 vorzugsweise kronenförmig ausgebildet und weist mehrere, in vorzugsweise gleichmäßigen Abständen voneinander beabstandete Einsenkungen 39 auf. Somit kann der auf der Zulaufseite A des Druckreduzierventils 1 anstehende Primärdruck durch den Ringspalt 40 und die zumindest eine Einsenkung 39 derart in den Ringraum 37 einsickern, dass in Schließstellung des Druckreduzierventils 1 die am Dichtring 18 vorgesehene dichtlippenartige Anformung 35 elastisch nämlich gegen die Eigenelastizität des für die Anformung 35 verwendeten Materials gegen den Innenumfang des topfförmigen Ventilkörpers 3 gepresst wird. Damit wird ein Durchsickern des auf der Zulaufseite A des Druckreduzierventils 1 anstehenden Primärdruckes durch den Ventilsitz 7 hindurch auch auf die ablaufseitige Sekundärseite B des Druckreduzierventils 1 und ein druckbedingtes Bersten des auf der Ablaufseite B des Druckreduzierventils 1 angeordneten Leitungsabschnitts wirkungsvoll verhindert.

### Bezugszeichenliste

- 1: Druckreduzierventil
- 2: Ventilgehäuse
- 3: Ventilkörper
- 4: Ventilträger
- 5: Durchströmkanal
- 6: Umfangsrand
- 7: Ventilsitz
- 8: Kanalöffnung
- 9: Haltehülse
- 10: Haltezapfen
- 11: Anschlag
- 12: Gegenanschlag
- 13: Druckfeder
- 14: Auflaufflanke
- 15: Auflaufflanke
- 16: Ventilträgerabschnitt
- 17: Führungsabschnitt
- 18: Dichtring
- 19: Dichtring
- 20: Verbindungsabschnitt
- 21: Gleitelement
- 22: Ringkanal
- 23: Ringnut
- 26: Außengewinde
- 27: Ringabsatz
- 29: Ringdichtung
- 30: Ringabsatz
- 31: Innengewinde
- 32: Ringnut
- 33: Nutflanke
- 34: Nutflanke
- 35: dichtlippenartige Anformung
- 36: Nutgrund
- 37: Ringraum
- 38: Druckausgleichskanal
- 39: Einsenkung
- 40: Ringspalt
- A: Zulaufseite
- B: Ablaufseite

## Patentansprüche

1. Druckreduzierventil (1) mit einem Ventilgehäuse (2), in dessen Gehäuseinnenraum ein Ventilträger (4) vorgesehen ist, der wenigstens einen Durchströmkanal (5) hat, und mit einem topfförmigen Ventilkörper (3), der von einer Offenstellung gegen eine Rückstellkraft in eine Schließstellung verschieblich geführt ist, in welcher Schließstellung der Ventilkörper (3) mit dem Umfangsrand (6) seiner Topfform derart an einem am Ventilträger (4) vorgesehenen und als Dichtring (18) ausgebildeten Ventilsitz (7) anliegt, dass der Ventilkörper (3) zumindest eine Kanalöffnung (8) des wenigstens einen Durchströmkanals (5) verschließt, wobei der Dichtring (18) in einer außenumfangsseitig offenen Ringnut (32) des Ventilträgers (4) gehalten und beidseits von den Nutflanken (33, 34) der Ringnut (32) axial gestützt ist, wobei die dem Ventilkörper (3) zugewandte Nutflanke (33) vor dem Innenumfang des in Schließstellung des Druckreduzierventils (1) am Dichtring (18) anliegenden Ventilkörpers (4) endet, wobei an der dem Ventilkörper (3) zugewandten Stirnfläche des Dichtrings (18) eine dichtlippenartige umlaufende Anformung (35) angeformt ist, und wobei diese dichtlippenartige Anformung (35) bei einem Anstieg des auf der Zulaufseite (A) des Druckreduzierventils (1) anstehenden Primärdrucks gegen den Innenumfang des Ventilkörpers (3) anlegbar ist, **dadurch gekennzeichnet,**
- **dass** zwischen einem Nutgrund (36) der Ringnut (32) und der dichtlippenartigen Anformung (35) ein Ringraum (37) vorgesehen ist, der mit der Zulaufseite (A) des Druckreduzierventils (1) kommuniziert, und
- **dass** im Bereich der Ringnut (32) zumindest ein Druckausgleichskanal (38) vorgesehen ist, der die Zulaufseite des Druckreduzierventils (1) mit dem Ringraum (37) verbindet und/oder, dass an dem dem Ventilkörper (3) zugewandten Stirnrand der dichtlippenartigen Anformung (35) zumindest eine Einsenkung (39) oder Einformung vorgesehen ist, welche den Ringraum (37) mit einem zwischen dem Ventilträger (4) und dem Ventilkörper (3) in Schließstellung des Druckreduzierventils (1) angeordneten Ringspalt (40) fluidführend verbindet.

2. Druckreduzierventil nach Anspruch 1, **dadurch gekennzeichnet, dass** der dem Ventilkörper (3) zugewandte Stirnrand der dichtlippenartigen Anformung (35) kronenförmig ausgebildet ist und voneinander beabstandete Einsenkungen (39) aufweist.

3. Druckreduzierventil nach Anspruch 1 oder 2, **dadurch gekennzeichnet, dass** das mindestens eine Rückstellelement eine Schrauben-Druckfeder (13) ist.

4. Druckreduzierventil nach einem der Ansprüche 1 bis 3, **dadurch gekennzeichnet, dass** der Ventilträger (4) einen Ventilträger-Abschnitt (16) hat, welcher Ventilträger-Abschnitt (16) am Gehäuse-Innenumfang des Ventilgehäuses (2) axial fest anliegt.

5. Druckreduzierventil nach Anspruch 4, **dadurch gekennzeichnet, dass** der Ventilträger-Abschnitt (16) des Ventilträgers (4) tellerförmig ausgebildet ist.

6. Druckreduzierventil nach einem der Ansprüche 1 bis 5, **dadurch gekennzeichnet, dass** der Ventilträger (4) einen Führungsabschnitt (17) hat, an welchem Führungsabschnitt (17) der topfförmige Ventilkörper (3) mit seinem Ventilkörper-Innenumfang verschieblich geführt ist.

7. Druckreduzierventil nach einem der Ansprüche 4 bis 6, **dadurch gekennzeichnet, dass** am Ventilträger-Abschnitt (16) und/oder am Führungsabschnitt (17) die Ringnut (32) vorgesehen ist.

8. Druckreduzierventil nach Anspruch 6 oder 7, **dadurch gekennzeichnet, dass** der Ventilträger-Abschnitt (16) und der Führungsabschnitt (17) des Ventilträgers (4) über einen Verbindungsabschnitt (20) verbunden sind.

9. Druckreduzierventil nach Anspruch 8, **dadurch gekennzeichnet, dass** an dem Verbindungsabschnitt (20) die zumindest eine Kanalöffnung (8) des wenigstens einen Durchströmkanals (5) vorgesehen ist.

10. Druckreduzierventil nach einem der Ansprüche 1 bis 9, **dadurch gekennzeichnet, dass** der Dichtring (18) zumindest im Bereich seiner dichtlippenartigen Anformung (35) aus einem elastischen Material hergestellt ist und dass die dichtlippenartige Anformung (35) in Schließstellung des Druckreduzierventils (1) elastisch gegen den Ventilkörper (3) gepresst wird.

## Claims

1. Pressure reducing valve (1) having a valve housing (2), in the housing interior space of which there is provided a valve carrier (4) which has at least one throughflow channel (5), and having a cup-shaped valve body (3) which is displaceably guided from an open position to a closed position counter to a restoring force, in which closed position the valve body (3) by way of the circumferential edge (6) of its cup shape abuts a valve seat (7), which is provided on the valve carrier (4) and is in the form of a sealing ring (18), in such a way that the valve body (3) closes at least one channel opening (8) in the at least one throughflow channel (5), wherein the sealing ring (18) is held in an annular groove (32) of the valve carrier (4) that is open on the outer circumference and is axially supported on either side by the groove flanks (33, 34) of the annular groove (32), wherein the groove flank (33) facing the valve body (3) ends in front of the inner circumference of the valve body (4), which abuts the sealing ring (18) when the pressure reducing valve (1) is in the closed position, wherein a sealing-lip-like circumferential moulded-on formation (35) is moulded on that end face of the sealing ring (18) that faces the valve body (3), and wherein this sealing-lip-like moulded-on formation (35) can come to lie against the inner circumference of the valve body (3) when the primary pressure prevailing on the inlet side (A) of the pressure reducing valve (1) rises, **characterized in that**
- an annular space (37), which communicates with the inlet side (A) of the pressure reducing valve (1), is provided between a groove base (36) of the annular groove (32) and the sealing-lip-like moulded-on formation (35), and
- at least one pressure equalization channel (38), which connects the inlet side of the pressure reducing valve (1) to the annular space (37), is provided in the region of the annular groove (32), and/or **in that** at least one depression (39) or indentation is provided on that face edge of the sealing-lip-like moulded-on formation (35) that faces the valve body (3), which at least one depression or indentation connects the annular space (37) to an annular gap (40), which is arranged between the valve carrier (4) and the valve body (3) when the pressure reducing valve (1) is in the closed position, in a fluid-carrying manner.

2. Pressure reducing valve according to Claim 1, **characterized in that** that face edge of the sealing-lip-like moulded-on formation (35) that faces the valve body (3) has a crown-shaped form and has depressions (39) which are spaced apart from one another.

3. Pressure reducing valve according to Claim 1 or 2, **characterized in that** the at least one restoring element is a helical compression spring (13).

4. Pressure reducing valve according to one of Claims 1 to 3, **characterized in that** the valve carrier (4) has a valve carrier portion (16), which valve carrier portion (16) axially fixedly abuts the housing inner circumference of the valve housing (2).

5. Pressure reducing valve according to Claim 4, **characterized in that** the valve carrier portion (16) of the valve carrier (4) is in the form of a plate.

6. Pressure reducing valve according to one of Claims 1 to 5, **characterized in that** the valve carrier (4) has a guide portion (17), on which guide portion (17) the cup-shaped valve body (3) is displaceably guided by way of its valve body inner circumference.

7. Pressure reducing valve according to one of Claims 4 to 6, **characterized in that** the annular groove (32) is provided on the valve carrier portion (16) and/or on the guide portion (17).

8. Pressure reducing valve according to Claim 6 or 7, **characterized in that** the valve carrier portion (16) and the guide portion (17) of the valve carrier (4) are connected via a connecting portion (20).

9. Pressure reducing valve according to Claim 8, **characterized in that** the at least one channel opening (8) in the at least one throughflow channel (5) is provided on the connecting portion (20).

10. Pressure reducing valve according to one of Claims 1 to 9, **characterized in that** the sealing ring (18) is produced from an elastic material at least in the region of its sealing-lip-like moulded-on formation (35), and **in that** the sealing-lip-like moulded-on formation (35) is elastically pressed against the valve body (3) when the pressure reducing valve (1) is in the closed position.

## Revendications

1. Soupape de réduction de pression (1) avec un boîtier de soupape (2), à l'intérieur duquel boîtier est prévu un support de soupape (4) qui possède au moins un canal de passage (5), et avec un corps de soupape en forme de pot (3) qui est guidé en translation contre une force de rappel d'une position ouverte à une position fermée, dans laquelle position fermée le corps de soupape (3) repose avec le bord périphérique (6) de sa forme de pot sur un siège de soupape (7) prévu sur le support de soupape (4) et est configuré comme une bague d'étanchéité (18) de telle sorte que le corps de soupape (3) obture une ouverture de canal (8) de l'au moins un canal de passage (5), dans laquelle la bague d'étanchéité (18) est maintenue dans une gorge annulaire (32) du support de soupape (4) ouverte sur la face périphérique extérieure et soutenue axialement de part et d'autre par les flancs de gorge (33, 34) de la gorge annulaire (32), dans laquelle le flanc de gorge (33) orienté vers le corps de soupape (3) se termine devant la périphérie intérieure du corps de soupape (4) s'appliquant sur la bague d'étanchéité (18) lorsque la soupape de réduction de pression (1) est en position fermée, dans laquelle une moulure périphérique en forme de lèvre d'étanchéité (35) est formée sur la face frontale de la bague d'étanchéité (18) orientée vers le corps de soupape (3), et dans laquelle cette moulure en forme de lèvre d'étanchéité (35) peut être appliquée contre la périphérie intérieure du corps de soupape (3) lors d'une augmentation de la pression primaire appliquée du côté alimentation (A) de la soupape de réduction de pression (1), **caractérisée**
- **en ce qu'**entre un fond de gorge (36) de la gorge annulaire (32) et la moulure en forme de lèvre d'étanchéité (35), il est prévu un espace annulaire (37) qui communique avec le côté alimentation (A) de la soupape de réduction de pression (1) et
- que, dans la région de la gorge annulaire (32), il est prévu au moins un canal qui relie le côté alimentation de la soupape de réduction de pression (1) avec l'espace annulaire (37) et/ou que, sur une face frontale de la moulure en forme de lèvre d'étanchéité (35) orientée vers le corps de soupape (3), il est prévu au moins un évidement (39) ou une empreinte qui relie en mode de conduction de fluide l'espace annulaire (37) avec une fente annulaire (40) disposée entre le support de soupape (4) et le corps de soupape (3) lorsque la soupape de réduction de pression (1) est en position fermée.

2. Soupape de réduction de pression selon la revendication 1, **caractérisée en ce que** le bord frontal orienté vers le corps de soupape (3) de la moulure en forme de lèvre d'étanchéité (35) est configuré en forme de couronne et présente des évidements (39) espacés les uns des autres.

3. Soupape de réduction de pression selon la revendication 1 ou 2, **caractérisée en ce que** l'au moins un élément de rappel est un ressort de compression hélicoïdal (13).

4. Soupape de réduction de pression selon une des revendications 1 à 3, **caractérisée en ce que** le support de soupape (4) a une section de support de soupape (16), laquelle section de support de soupape (16) est fixée axialement sur la périphérie intérieure de boîtier du boîtier de soupape (2).

5. Soupape de réduction de pression selon la revendication 4, **caractérisée en ce que** la section de support de soupape (16) du support de soupape (4) est configurée en forme d'assiette.

6. Soupape de réduction de pression selon une des revendications 1 à 5, **caractérisée en ce que** le support de soupape (4) a une section de guidage (17) sur laquelle section de guidage (17) le corps de soupape en forme de port (3) est guidé en translation avec sa périphérie intérieure de corps de soupape.

7. Soupape de réduction de pression selon une des revendications 4 à 6, **caractérisée en ce que** la gorge annulaire (32) est prévue sur la section de support de soupape (16) et/ou sur la section de guidage (17).

8. Soupape de réduction de pression selon la revendication 6 ou 7, **caractérisée en ce que** la section de support de soupape (16) et la section de guidage (17) du support de soupape (4) sont raccordées par une section de raccordement (20).

9. Soupape de réduction de pression selon la revendication 8, **caractérisée en ce que** l'au moins une ouverture de canal (8) de l'au moins un canal de passage (5) est prévue sur la section de raccordement (20).

10. Soupape de réduction de pression selon une des revendications 1 à 9, **caractérisée en ce que** la bague annulaire (18) est fabriquée dans un matériau élastique au moins dans la région de sa moulure périphérique en forme de lèvre d'étanchéité (35) et que la moulure périphérique en forme de lèvre d'étanchéité (35) est pressée élastiquement contre le corps de soupape (3) lorsque la soupape de réduction de pression (1) est en position fermée.
